# EUROPEAN PATENT APPLICATION

(11) **EP 1 930 891 A1**
(43) Date of publication of application: **11.06.2008**
(21) Application number: 07022690.7
(22) Date of filing: 22.11.2007
(51) Int. Cl.: G11B 7/135

(54) **Optical pickup device and optical disc apparatus**

(30) Priority: 04.12.2006 JP 2006327014
(71) Applicant: Funai Electric Co., Ltd., Daito-shi Osaka 574-0013 (JP)
(72) Inventor: Sasabe, Mitsuyoshi, Daito-shi Osaka 574-0013 (JP); Nishioka, Ken, Daito-shi Osaka 574-0013 (JP); Hamaoka, Mika, Daito-shi Osaka 574-0013 (JP)
(74) Representative: Beetz & Partner

(57) **Abstract**

An optical pickup device (59) in which light via a beam shaping mirror (16) is input to an objective lens (18) and the light is directed to an optical disc (41), includes a collimator lens (15) which changes the light input to the beam shaping mirror (16) into infinite system light and the beam shaping mirror (16) includes a diffraction grating (1) which changes the infinite system light into finite system light.

## Description

### BACKGROUND OF THE INVENTION

### Field of the Invention

The present invention relates to an optical pickup device in which a light beam is irradiated to an optical disc to perform information reading or recording and an optical disc apparatus on which the optical pickup device is mounted.

### Description of Related Art

Nowadays optical discs such as a Blu-ray disc (BD) which is one of a next generation Digital Versatile Disc (DVD), a Compact Disc (CD), a DVD and the like have become popular. When these optical discs are recorded or reproduced, an optical pickup device which irradiates light beam (for example, laser light) on the optical disc to perform information reading or information recording, is utilized.

In the optical pickup device an objective lens is provided to condense a laser light to irradiate the light on the optical disc. In such irradiation on the optical disc what causes problems is various kinds of aberration such as spherical aberration and astigmatism which is generated in the laser light. The reason is once the various aberrations are generated, a spot diameter of the laser light on the optical disc becomes largely different from a desired shape.

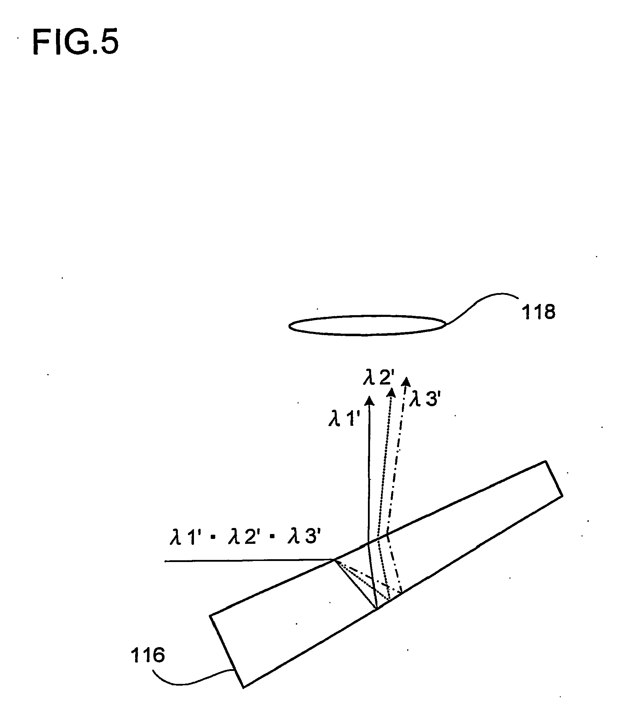

As one reason of these various aberrations, an incident angle of the laser light into the objective lens, to be in more detail, input of the laser light with a slanted angle with respect to a lens axis of the objective lens can be given. Heretofore, as shown in Fig. 5, it was possible to input one kind of laser light having wavelength of λ1' for a BD parallel to a lens axis of an objective lens 118 by an optical element for correcting 116.

However, in a recent optical pickup device which is applicable to a plurality of optical discs, other kind laser light having wavelength of λ2' for a DVD or wavelength of λ3' for a CD is input to the objective lens 118 with a slanted angle with respect to a lens axis of the objective lens 118 because refraction index of the optical element for correcting 116 becomes different for every wavelength (See, Fig. 5).

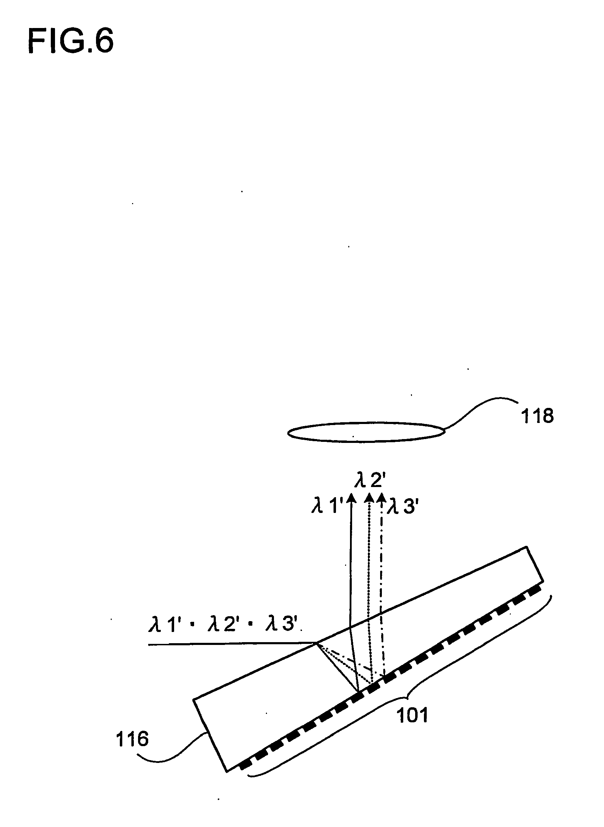

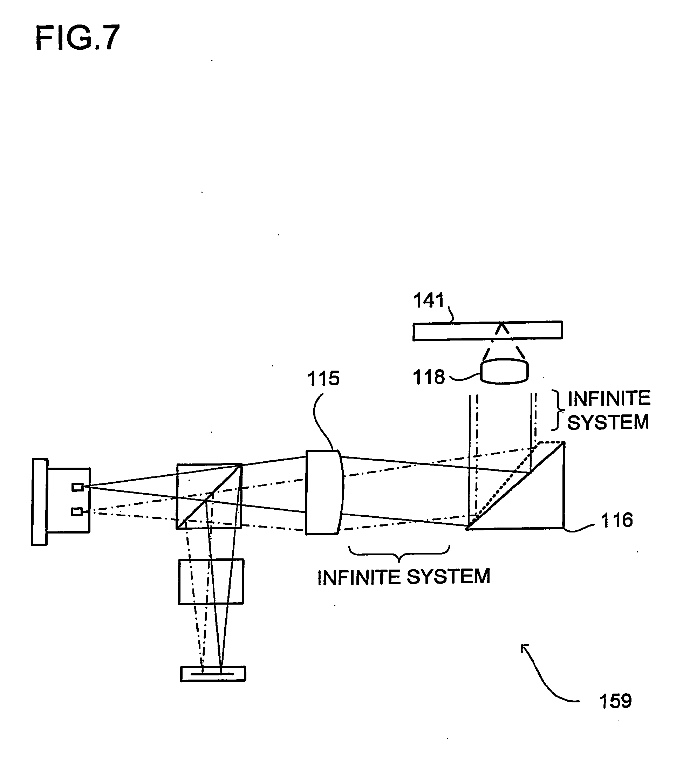

As for a countermeasure for this input to the objective lens 118 with the slanted angle, there are technologies shown in Fig. 6 and Fig. 7. Fig. 6 shows a beam shaping mirror (optical element for correcting) 116 which has a diffraction grating 101. The beam shaping mirror 116 directs optical axes of three kind laser light in the same direction by utilizing the diffraction grating 101.

On the other hand Fig. 7 shows an optical pickup device 159 which is disclosed in JP-A-2002-304761. This optical pickup device 159 corrects the optical axes of the laser light having different wavelengths parallel with respect to the lens axis of the objective lens 118 by an optical element for correcting 116 which has a total reflection film and a wavelength selection film.

As above described, the incident angle of the laser light with respect to the objective lens 118 can be corrected adequately by the optical elements for correcting 116 which are shown in Fig. 6 and Fig. 7. However, an infinite system laser light which passes the collimator lens 115 such as that in an optical pickup device 159 shown in Fig. 7, is input to the objective lens 118 via an optical element for correcting 116 as the infinite system laser light. Then, problem as described below is caused.

The problem is that if the infinite system laser light for a DVD or a CD is input to an objective lens 118 which is designed not to generate spherical aberration for the infinite system laser light for a BD, the spherical aberration is generated remarkably in the laser light when the laser light reaches an optical disc 141 of a DVD or a CD,.

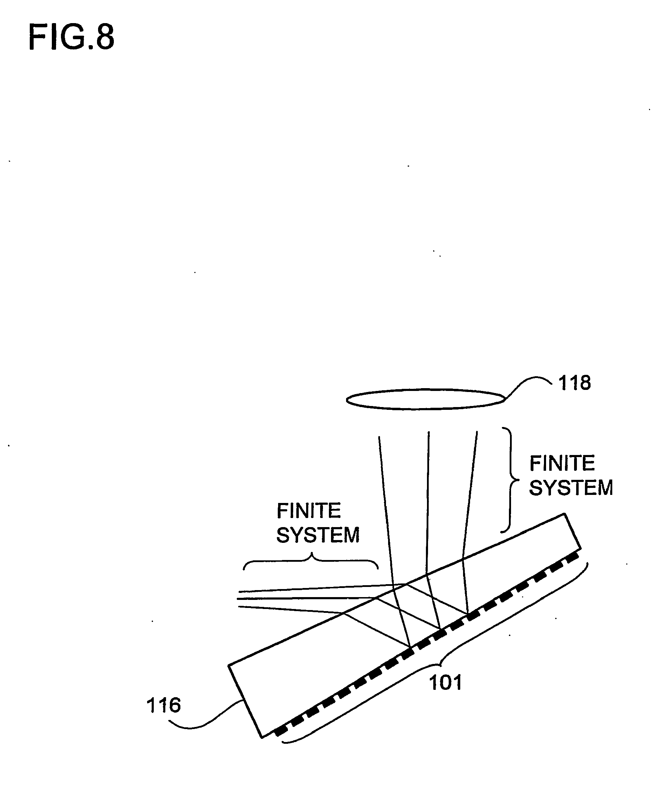

As for one countermeasure for suppressing such spherical aberration, one example is to make an output laser light be a finite system laser light by making an input laser light to the optical element for correcting 116 be a finite system laser light as shown in Fig. 8. The reason is that the spherical aberration which is generated when the finite system laser light is input to the objective lens 118 becomes smaller than the spherical aberration which is generated when the infinite system laser light is input to the objective lens 118.

However, if the laser light which is input to the optical element for correcting 116 is the finite system laser light and the laser light which is output is also the finite system laser light as shown in Fig. 8, an optical path of the laser light which goes as the finite system laser light becomes very long. In addition, due to the long optical path, a degree of divergence of the finite system laser light becomes higher (in other words, astigmatism tends to be generated). And when the laser light which has such high degree of divergence is input to the objective lens 118, the astigmatism tends to be generated remarkably. Therefore, this kind of countermeasure is not good idea.

### SUMMARY OF THE INVENTION

The present invention is made to solve the above described problem, and it is an object of the present invention to provide an optical pickup device which can suppress the spherical aberration and can suppress the astigmatism also, and an optical disc apparatus having the same.

An optical pickup device in accordance with a first aspect of the present invention includes: a light source which emits light; a collimator lens which changes the light from the light source into infinite system light; a diffraction grating which changes the infinite system light into finite system light; and an optical element for correcting which includes the diffraction grating. Further, an optical disc apparatus in accordance with a second aspect of the present invention includes an optical pickup device including: a light source which emits light; a collimator lens which changes the light from the light source into infinite system light; a diffraction grating which changes the infinite system light into finite system light; and an optical element for correcting which includes the diffraction grating.

The above and other objects and features of the present invention will become clearer by referring to description on the preferred embodiments below and the attached drawings.

### DESCRIPTION OF THE DRAWINGS

Fig. 1 is a structure diagram of an optical pickup device.
Fig. 2 is an enlarged view of a beam shaping mirror shown in Fig. 1.
Fig. 3 is a plan view of a diffraction grating.
Fig. 4 is a plan view of a diffraction grating which has different layout from Fig. 3.
Fig. 5 is a structure diagram of a conventional optical element for correcting.
Fig. 6 is a structure diagram of a beam shaping mirror which includes a diffraction grating.
Fig. 7 is a structure diagram of a conventional optical pickup device.
Fig. 8 is a structure diagram of a conventional beam shaping mirror.

### DESCRIPTION OF THE PREFERRED EMBODIMENTS

### [First Embodiment]

Hereinafter one embodiment according to the present invention will be explained with reference to the drawings. At this point, in some drawings, reference number or the like may be omitted for the sake of convenience, however, in such a case, refer to other drawings.

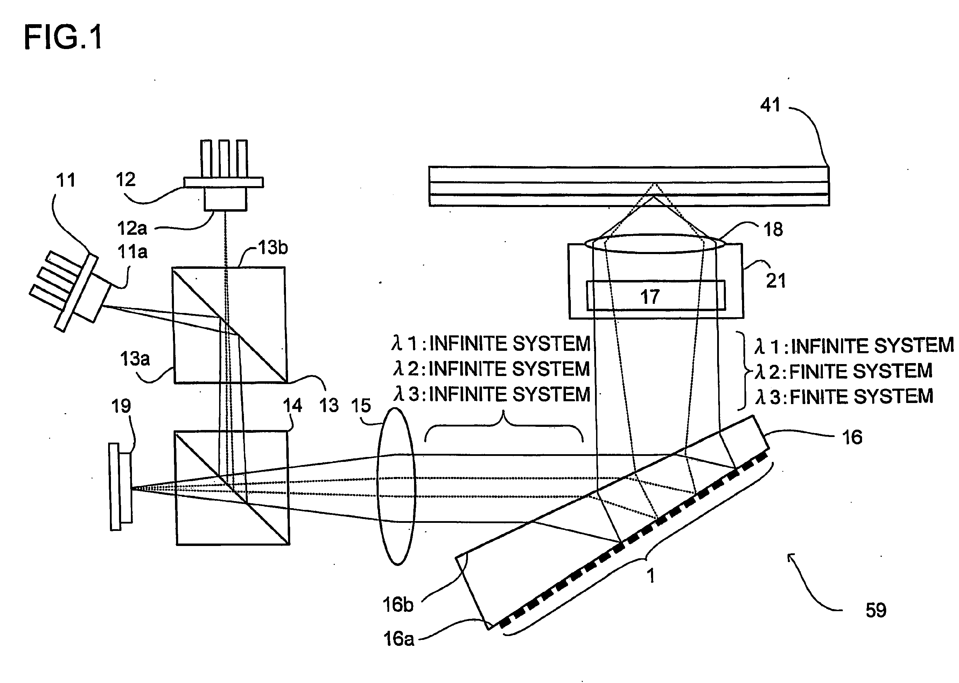

Fig. 1 is a structure diagram to show a structure of an optical pickup device 59 which is mounted on an optical disc apparatus. As shown in this drawing, the optical pickup device 59 is equipped with two laser diodes (light sources) 11, 12, a dichroic prism 13, a half mirror 14, a collimator lens 15, a beam shaping mirror 16, a liquid crystal element 17, an objective lens 18 and a photo diode 19.

At this point the liquid crystal element 17 and the objective lens 18 are mounted on an actuator 21. Further in Fig. 1, an optical disc 41 is also shown for the sake of convenience. The laser light which is input to the optical disc 41 is referred to as "irradiating light" and the laser light which is reflected by the optical disc 41 is referred to as "returning light".

Hereinafter, respective members will be explained in an order along the optical path of the irradiating light. There are two laser diodes (light sources) and the laser diode 11 which is one of them emits laser light having single wavelength toward the dichroic prism 13. The other laser diode 12 emits laser light having a plurality of wavelengths toward the dichroic prism 13.

The laser diode 11 emits laser light having wavelength of 405 nm which is used for a Blu-ray Disc (BD) that is one of a next generation Digital Versatile Disc (DVD). On the other hand, the laser diode 12 emits laser light having wavelength of 785 nm which is used for a Compact Disc (CD) and laser light having wavelength of 660 nm which is used for the DVD. As a result, the optical pickup device 59 is applicable to three types of optical discs which are BD, CD and DVD.

In addition, the laser diode 11 and the laser diode 12 are disposed such that optical axes of light which are output from the dichroic prism 13, in other words, an optical axis of the laser light originated from the laser diode 11 and an optical axis of the laser light originated from the laser diode 12 become substantially the same.

The dichroic prism 13 receives the laser light from the laser diodes 11, 12 and reflects the laser light which is emitted from the laser diode 11 while it transmits the laser light which is output from the laser diode 12. Then, the reflected light and transmitted light which are output from the dichroic prism 13 go toward the half mirror 14.

The half mirror 14 directs the laser light which comes from the dichroic prism 13 to the collimator lens 15 by reflection.

The collimator lens 15 converts the light from the half mirror 14 (in detail, diverging light) into parallel light and directs it to the beam shaping mirror 16.

The beam shaping mirror 16 reflects the parallel light which is input and directs it to the liquid crystal element 17. Further, detail of the beam shaping mirror 16 will be described later.

The liquid crystal element 17 is composed of two transparent substrates which are bonded together by seal material and liquid crystal (not shown) is filled in a gap between the substrates. Further a transparent electrode (for example, Indium-Tin-Oxide (ITO)) which has a suitable shape for aberration correction is disposed on a liquid crystal side surface of each of the transparent substrates of the liquid crystal element 17 and an oriented film is disposed on the liquid crystal side surface of each of the transparent electrodes.

Further the liquid crystal element 17 lets the input light pass and directs it to the objective lens 18. But phase of the light which passes the liquid crystal element 17 variously varies in response to the shape of the transparent electrode in the liquid crystal element 17 and inclination of the liquid crystal (in detail, molecule of the liquid crystal) that is varied by voltage which is applied between the transparent electrodes and then the light reaches the objective lens 18.

The objective lens 21 condenses the input light on a recording surface of the optical disc 41. And the light which is condensed as above described does not generate various aberrations (for example, the spherical aberration) as little as possible by phase adjustment at the liquid crystal element 17. As a result the shape of transparent electrode in the liquid crystal element 17 and the orientation of the liquid crystal which varies in response to the voltage which is applied between the transparent electrodes can be said as follows. They are set such that the spherical aberration or the like is not generated in the condensed light spot on the recording surface of the optical disc 41.

Further, this objective lens 18 is designed not to generate the spherical aberration as much as possible when the objective lens 18 let the infinite system light having wavelength of 405 nm pass. This reason is that if the objective lens 18 is designed not to generate the spherical aberration on the harshest condition (wavelength condition in which the spherical aberration is most easily generated), the spherical aberration becomes hard to be generated when light having other wavelength passes the objective lens 18.

Next, respective members will be explained in an order along the optical path of the returning light. The returning light from the optical disc 41 passes the objective lens 18 and the liquid crystal element 17 which are mounted on the actuator 21, then reaches the half mirror 14 via the beam shaping mirror 16 and the collimator lens 15. And the half mirror 14 transmits the returning light without reflecting it and directs it to the photo diode 19.

The photo diode 19 performs photoelectric conversion from a light signal which is received in an photo detecting area into an electric signal and sends the electric signal to a Radio Frequency (RF) detecting circuit (not shown). And the electric signal which is detected by the RF detecting circuit is used as reproducing signal to reproduce information, a focus error signal or a tracking error signal and the like for performing focus adjustment or tracking adjustment of the objective lens 18.

Here, the beam shaping mirror (optical element for correcting) 16 will be explained. The beam shaping mirror 16 is composed of a transparent member such as glass, transparent resin or the like and it forms a reflecting surface 16a by including a dielectric multilayer or the like. In addition, the beam shaping mirror 16 includes a diffraction grating 1 on the reflecting surface 16a, in other words, at a midpoint of the optical path in the beam shaping mirror 16.

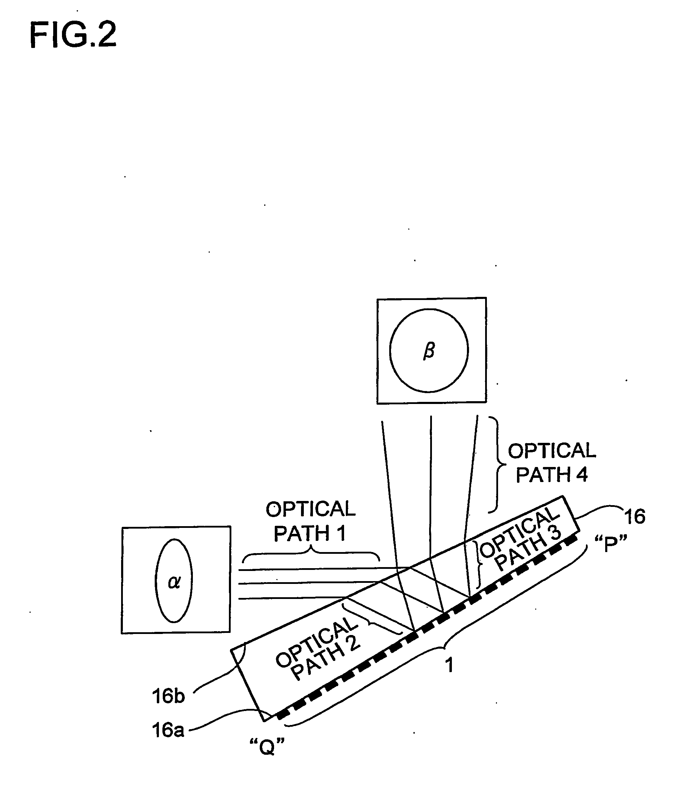

This diffraction grating 1 has various functions. For example, as shown in Fig. 2 which is an enlarged view of the beam shaping mirror 16, the diffraction grating 1 adjusts an elliptic shape intensity distribution a of light (an infinite system light) from the collimator lens 15 to a complete circular shape intensity distribution β after the light is output from the beam shaping mirror 16. This function is called as a light intensity distribution adjusting function. By this function a good spot diameter is formed on the recording surface of the optical disc 41.

Further, the diffraction grating 1 dissolves displacement of inclination in an optical axis direction for every wavelength (λ1; 405 nm, λ2; 660 nm, λ3; 785 nm). The beam shaping mirror 16 is usually designed such that an input light having a wavelength (for example, λ1) and an output light make a desired angle (for example, ninety degrees). Because of this, if light having other wavelength (λ2 or λ3) is input to and output from the beam shaping mirror 16, the displacement of inclination generates between the direction of optical axis of the output light having wavelength of λ2 or λ3 and the direction of optical axis of the output light having wavelength of λ1.

When the displacement of inclination is generated, it becomes hard to form a desired shape for a spot diameter of the output light having wavelength of λ2 or λ3. Then the diffraction grating 1 makes directions of the optical axes of light that correspond to the respective wavelengths of λ1, λ2 and λ3 which are output from the beam shaping mirror 16 become the same direction by diffracting the light having wavelength of λ2 or λ3 at a desired direction. This function is called as an optical axis adjusting function.

Further, as well as the diffraction grating 1 has the optical axis adjusting function, it changes the infinite system light into the finite system light. This function is called as a light system changing function. In general, the beam shaping mirror 16 does not change the light system (the finite system or the infinite system) of input light and output light. Because of this, for example, when the infinite system light is input to the beam shaping mirror 16, the light is output toward the objective lens 18 as the infinite system light.

Further, because the objective lens 18 in the present embodiment is designed such that the objective lens 18 suppresses generation of the spherical aberration caused by input of laser light which is the infinite system light and has wavelength of λ1, the spherical aberration is not generated in the laser light having wavelength of λ1. However, in general, because a remarkable spherical aberration is generated when the infinite system light is input to the objective lens 18, the spherical aberration caused by the light which is the infinite system light and has other wavelength of λ2 or λ3 is still generated.

As an expedient for suppression of the spherical aberration, it is well known that the finite system light is input to the objective lens 18. However in this expedient, because of the finite light, aspherical aberration which is generated until the light reaches the objective lens 18 (aspherical aberration caused by the light having wavelength of λ2 or λ3) is increased because the light pass the objective lens 18.

Then, desirable light is the finite system light which goes without generating the astigmatism as much as possible just until it is input to the objective lens 18, for example, the finite system light which has a shortened optical path. For this purpose, the diffraction grating 1 is disposed at the midpoint of the optical path in the beam shaping mirror 16 (at the reflecting surface 16a) and changes the infinite system light which has non-intended wavelength of design of the objective lens 18, for example λ2, λ3 or the like into the finite system light.

By the above described arrangement, as shown in Fig. 2, light having wavelength of λ2 or λ3 until it is input to the beam shaping mirror 16 (light in an optical path 1) and light having wavelength of λ2 or λ3 from an input surface 16b of the beam shaping mirror 16 to the reflecting surface 16a of the beam shaping mirror 16 (light in an optical path 2) become the infinite system light. On the other hand, light having wavelength of λ2 or λ3 from the reflecting surface 16a to the light is output in the beam shaping mirror 16 (light in the optical path 3) and light having wavelength of λ2 or λ3 output from the beam shaping mirror 16 (light in the optical path 4) become the finite system light by the diffraction grating 1. (See table below.)

| | optical path 1 ↓ | optical path 2 ↓ | optical path 3 ↓ | optical path 4 ↓ |
|---|---|---|---|---|
| λ1 → | infinite system | infinite system | infinite system | infinite system |
| λ2 → | infinite system | infinite system | finite system | finite system |
| λ3 → | infinite system | infinite system | finite system | finite system |

That is to say, in the beam shaping mirror 16 which has such diffraction grating 1 as described above, there is no need that the light is the finite system light before it is input to the beam shaping mirror, and the optical path of the finite system light is shortened for length of the light paths 1 and 2 (for length of generation of the infinite system light). Because of this degree of divergence of the light which becomes the finite system light and goes toward the objective lens 18 in the optical paths 3 and 4 becomes smaller than, for example, that of the light which becomes the finite system light and goes toward the objective lens 18 in the optical paths 1 to 4. Then the astigmatism which is generated in the light with such small degree of divergence becomes smaller. As a result, in the optical pickup device 59, the astigmatism becomes difficult to be generated.

Further, as above described, the laser light is divided into two kinds according to difference between shorter wavelength and longer wavelength, and the infinite system light which is composed of light corresponding to the longer wavelength of λ2 or λ3 among them, is changed into the finite system light by the beam shaping mirror 16. This is because the objective lens 18 is designed such that the spherical aberration is not generated by the infinite system light which has shorter wavelength of λ1, therefore there is no need to change the infinite system light having shorter wavelength into the finite system light for suppressing the spherical aberration.

As a result, the optical pickup device 59 surely suppresses the spherical aberration caused by the light having shorter wavelength by the objective lens 18 which is designed such that the spherical aberration is not generated by the infinite system light which has shorter wavelength (for example, λ1), and the optical pickup device 59 suppresses the spherical aberration caused by the light which has longer wavelength (for example, λ2 or λ3) as much as possible. On the other hand the optical pickup device 59 suppresses the spherical aberration caused by the light having the longer wavelength which is not able to be fully suppressed by the finite system light, and suppresses also generation of the astigmatism by shortening the light path of the finite system light.

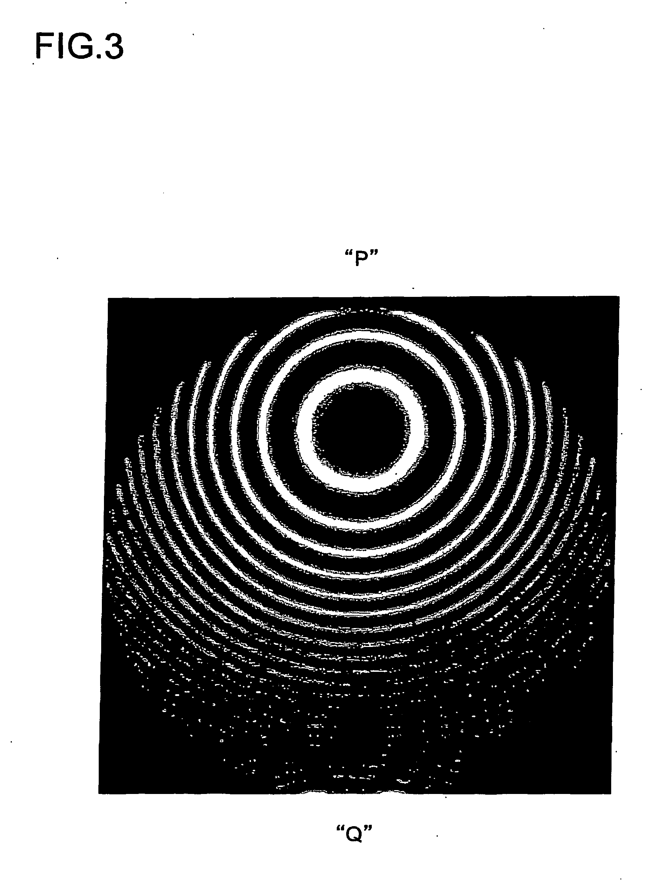

By the way, we can think various shapes of the diffraction grating 1 as above described. For example, as shown in Fig. 3, one of them is a diffraction grating 1 includes a portion which has a pattern of concentric circles whose center is located in a shifted position from a center of surface of the diffraction grating 1 and widths of granting become narrower from the center of the concentric circles to outside.

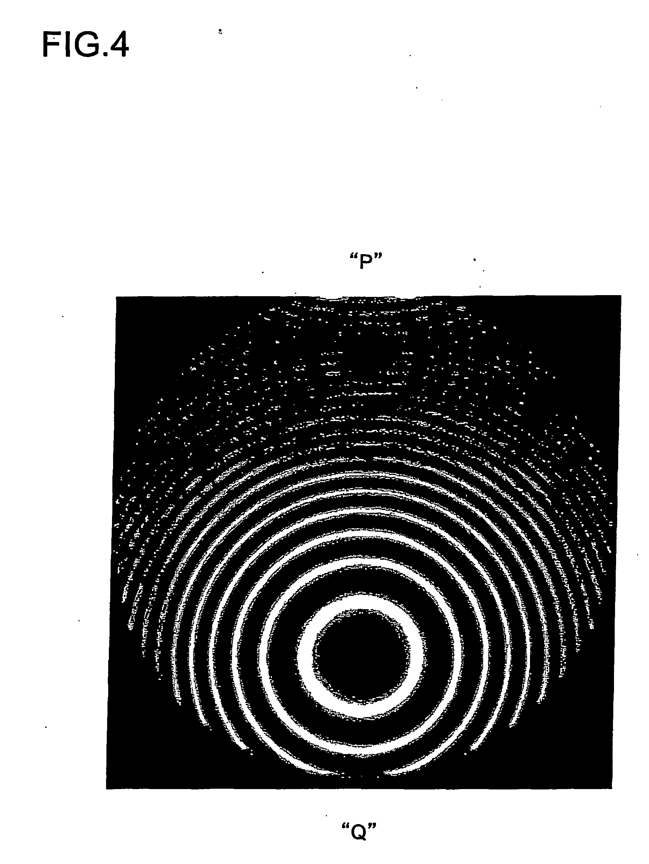

Further, we can think also various layouts of the diffraction grating 1. The positions "P" and "Q" of the diffraction grating 1 in Fig. 3 correspond to the position "P" and "Q" in Fig. 2. That is to say, the center of the concentric circles of the diffraction grating 1 is disposed in a position which is near to the objective lens 18. However, the present invention is not limited to this example. For example, as shown in Fig. 4, the center of the concentric circles of the diffraction grating 1 may be disposed in a position which is far from the objective lens 18, that is, an inverse direction relation to Fig. 3 may be possible. In short, the layout of the diffraction grating may be variously modified in response to the degree of divergence of the light or the direction of the light to be diverged.

### [Other Embodiments]

The present invention is not limited to the above described embodiment and various modifications can be introduced without departing from the purport of the present invention.

For example, each of the concrete wavelengths of λ1 to λ3 of the laser light is merely one example, and the present invention is not limited to the above described values, i.e., λ1; 405nm, λ2; 660nm, λ3; 785nm. In short, the optical pickup device 59 may be any type of the optical pickup device as far as it can emit laser light of a plurality of kinds of wavelength.

Further, in the optical pickup device 59, a plurality of laser diodes 11, 12 are mounted. And the laser diode 11, 12 are disposed such that center of intensity distribution of the light having shorter wavelength and center of the intensity distribution of the light having longer wavelength are agreed with each other after the lights pass the beam shaping mirror 16.

As one example as shown in Fig. 1, we give a layout in which an output surface 11a of the laser diode 11 for the laser light having shorter wavelength is not parallel to an input surface 13a of the dichroic prism 13 which opposes to the output surface 11a, while an output surface 12a of the laser diode 12 for the laser light having longer wavelength is parallel to an input surface 13b of the dichroic prism 13 which opposes to the output surface 12a.

As above described, if the center of intensity distribution of the light having shorter wavelength agrees with the center of the intensity distribution of the light having longer wavelength after the lights pass the beam shaping mirror 16, deterioration of various signals (the reproducing signal, the focus error signal, the tracking error signal and the like) which are caused by uneven distribution of intensity can be prevented.

Further, the returning light which is input to the collimator lens 15, i.e., a reflected light from the optical disc 41, is the infinite system light. Then, the collimator lens 15 transmits the returning light and the collimator lens 15 makes a focusing point of the reflected light which has shorter wavelength (for example, λ1) and a focusing point of the reflected light which has longer wavelength (for example, λ2 or λ3) agree with each other.

By these arrangement, it is possible to receive the returning light of a plurality of kinds of wavelengths on a light receiving surface of one photo diode 19 by making the focusing points of light of respective wavelength agree with the light receiving surface. Because of this, photo diodes which correspond to respective wavelengths become unnecessary. This results in cost reduction for the optical pickup device 59, eventually for the optical disc apparatus.

In addition, in the above described explanation, the beam shaping mirror 16 is given as one example of the optical element for correcting, however, the present invention in not limited to this example. In short, the optical element for correcting may be an optical element (for example, a prism) including the diffraction grating possible to change the infinite system light into the finite system light.

Further, the optical pickup device which is explained in above description can be expressed as below described.

The optical pickup device in accordance with the present invention has a structure in which light via an optical element for correcting is input to an objective lens and the light is directed to an optical disc. And in such the optical pickup device a collimator lens which changes light that is input to the optical element for correcting into an infinite system light is mounted and the optical element for correcting includes a diffraction grating that changes an infinite system light into a finite system light.

In the optical pickup device as above described, the system of light changes between until the light is input to the optical element for correcting and after the light is output from the optical element by existence of the optical element for correcting, especially by the diffraction grating which is formed on the optical element for correcting. As a result, though the light input to the objective lens is the finite system light, a light path as the finite system light becomes short for existence of the infinite system light. When the optical path of the finite system light becomes short as above described, a degree of divergence of the light until it is input to the objective lens becomes small because of it. Therefore, astigmatism caused by the degree of divergence of the light becomes reduced.

Further, it is preferable that such diffraction grating not only has the function to change the infinite system light into the finite system light (divergent light generating function) but also has an optical axis adjusting function.

Further, it is preferable that the diffraction grating is disposed at a midpoint of the optical path of the light in the optical element for correcting.

Further, there are various shapes of the diffraction gratings. One example of the diffraction grating has a portion which is a pattern of concentric circles whose center is located in a shifted position from a center of surface of the diffraction grating and widths of grating become narrower from center of the concentric circles to outside.

Further, it is preferable that the light is divided into two kinds according to difference between shorter wavelength and longer wavelength, and the infinite system light which is composed of light corresponding to the longer wavelength among them is changed into the finite system light by the optical element for correcting.

Further, it is preferable that in the optical pickup device, a plurality of light sources are mounted, and the light sources are disposed such that center of intensity distribution of the light having shorter wavelength and center of the intensity distribution of the light having longer wavelength are agreed with each other among the divided light after the divided light pass the optical element for correcting.

Further it is preferable that in the optical pickup device, the collimator lens transmits the reflected light from the optical disc and the collimator lens makes a focusing point of the reflected light which has shorter wavelength and a focusing point of the reflected light which has longer wavelength agree with each other among the divided light.

Further, it is preferable that the optical element for correcting is a beam shaping mirror.

Further, the present invention includes also an optical disc apparatus which has the optical pickup device as above described.

The optical disc apparatus which has the optical pickup device in accordance with the present invention in which light via an beam shaping mirror is input to an objective lens and the light is directed to an optical disc can be expressed differently as below described.

That is to say, in the optical disc apparatus a collimator lens which changes light that is input to an beam shaping mirror into an infinite system light is mounted and the beam shaping mirror includes a diffraction grating as below described (1) that has an optical axis adjusting function and the beam shaping mirror changes the infinite system light which is composed of light corresponding to the longer wavelength among the rights which are divided into two kinds according to difference between shorter wavelength and longer wavelength, into the finite system light by disposing the diffraction grating at a midpoint of the optical path of the light in the beam shaping mirror.

(1) The diffraction grating includes a portion which has a pattern of concentric circles whose center is located in a shifted position from a center of surface of the diffraction grating and widths of grating become narrower as from center of the concentric circles to outside.

Further, in the optical pickup device, a plurality of light sources are mounted, and the light sources are disposed such that center of intensity distribution of the light having shorter wavelength and center of the intensity distribution of the light having longer wavelength are made agree with each other among the divided light after the divided light passes the beam shaping mirror. Further, the collimator lens transmits the reflected light from the optical disc and the collimator lens makes a focusing point of the reflected light which has shorter wavelength and a focusing point of the reflected light which has longer wavelength agree with each other among the divided light.

In addition, the concrete embodiments or the concrete examples which are described in the explanation above are intended only to clarify technical contents of the present invention. Therefore, the present invention should not be narrowly interpreted with limitation to the above described concrete examples but the present invention can be carried out with various modifications within the scope of the appended claims.

## Claims

1. An optical pickup device (59) in which light via an optical element for correcting (16) is input to an objective lens (18) and the light is directed to an optical disc (41), **characterized by**,
a collimator lens (15) which changes the light input to the optical element for correcting (16) into infinite system light,
wherein the optical element for correcting (16) includes a diffraction grating (1) which changes the infinite system light into finite system light.

2. The optical pickup device (59) according to claim 1, wherein the diffraction grating (1) has also an optical axis adjusting function.

3. The optical pickup device (59) according to claim 1 or 2, wherein the diffraction grating (1) is disposed at a midpoint of an optical path of the light in the optical element for correcting (16).

4. The optical pickup device (59) according to any one of claim 1 to 3, wherein the diffraction grating (1) includes a portion which has a pattern of concentric circles whose center is located in a shifted position from a center of surface of the diffraction grating (1) and widths of grating become narrower from the center of concentric circles to outside.

5. The optical pickup device (59) according to any one of claim 1 to 4, wherein the light is divided into two kinds according to difference between shorter wavelength and longer wavelength, and the infinite system light which is composed of light corresponding to the longer wavelength among the divided light is changed into the finite system light by the optical element for correcting (16).

6. The optical pickup device (59) according to claim 5, further comprising a plurality of light sources (11, 12), wherein the light sources (11, 12) are disposed such that center of intensity distribution of the light having shorter wavelength and center of the intensity distribution of the light having longer wavelength among the divided light are made agree with each other after the divided light passes the optical element for correcting (16).

7. The optical pickup device (59) according to claim 5 or 6, wherein the collimator lens (15) transmits reflected light from the optical disc (41) and the collimator lens makes a focusing point of the reflected light which has shorter wavelength and a focusing point of the reflected light which has longer wavelength among the divided light agree with each other.

8. The optical pickup device (59) according to any one of the claims 1 to 7, wherein the optical element for correcting (16) is a beam shaping mirror (16).

9. An optical disc apparatus comprising the optical pickup device (59) according to any one of the claims 1 to 8.
